# EUROPEAN PATENT SPECIFICATION

(11) **EP 4 369 954 B1**
(45) Date of publication and mention of the grant of the patent: **25.12.2024**
(21) Application number: 22744204.3
(22) Date of filing: 14.07.2022
(51) Int. Cl.: A24C 5/28, A24C 5/34, A24C 5/32

(54) **A DEVICE AND A METHOD FOR MANUFACTURING MULTI-SEGMENT ROD-LIKE ARTICLES**
VORRICHTUNG UND VERFAHREN ZUR HERSTELLUNG VON MEHRSEGMENT STABFORMIGEN ARTIKELN
DISPOSITIF ET PROCÉDÉ DE FABRICATION D'ARTICLES EN FORME DE TIGE À SEGMENTS MULTIPLES

(30) Priority: 14.07.2021 PL 43847021
(43) Date of publication of application: 22.05.2024
(73) Proprietor: International Tobacco Machinery Poland SP. Z O.O., 26-600 Radom (PL)
(72) Inventor: CIESLIKOWSKI, Bartosz, 26-400 Przysucha (PL)
(74) Representative: Kancelaria Eupatent.pl Sp. z.o.o
(86) International application number: PCT/EP2022/069819
(87) International publication number: WO 2023/285635

(56) References cited:
- WO-A1-2018/142279
- WO-A1-2019/105813
- US-A- 5 406 376
- US-A1- 2007 091 326

## Description

### TECHNICAL FIELD

The present invention relates to a device and a method for manufacturing multi-segment rod-like articles.

### BACKGROUND

In tobacco industry a variety of rod-like articles are manufactured, such as cigarettes with a multi-segment mouthpiece, multi-segment filter rods. Segments of such articles are typically produced in a continuous process by cutting a continuous rod into individual segments or cutting the rod into single rods and then cutting the rods into single segments. The manufacturing process requires production of semi-finished products that comprise both filled and tubular segments, wherein the filled segments can be filled with a variety of filler materials used in the tobacco industry, such as tobacco material, processed tobacco material, filter material or material necessary to form segments of special properties, such as segments through which smoke in a final product is not filtered, but only flows and is cooled.

Nowadays, more and more products appear on the market that comprise short segments, for example, articles wherein processed tobacco is not burned, but only heated. Some segments of final products have a few millimeters, and their manipulation in the production process is very difficult, therefore, at the initial stage of production, long sections of material or continuous rods of material are cut into single rods, and the rods are cut into shorter sections. The length of these sections is often twice as long as the segments that will ultimately become components of the final products. The segments in the rod-like articles may be filled, as well as tubular. The need to maintain a high quality of tobacco products means that the rods, the segments cut from the rods, as well as the semi-finished products and the final products are manufactured with the imposed length tolerance, wherein the length measurement should take place while these elements are being transferred. For example, there are semi-finished products which end with tubular segments, and the length of these segments must be within a narrow tolerance range.

WO2019105813 discloses a replenishing device for replenishing a flute of a transporter with a rod-like element, wherein the transporter comprises multiple flutes located transversally with respect to a transporting direction and adapted to transport rod-like elements, the replenishing device comprising: a feeding duct for feeding the rod-like element; a rotary replenishing element having an axis of rotation, comprising at least one transferring seat for receiving the rod-like element from the feeding duct in a receiving zone and for transferring the rod-like element to the flute of the transporter in a transferring zone, wherein the rotary replenishing element is adapted to repeatedly pass the same rod-like element through the transferring zone before transferring that rod-like element to the flute of the transporter and a transferring mechanism for effecting the transfer of the rod-like element from the transferring seat to the flute of the transporter.

US5406376 discloses an apparatus for testing the end portions of cigarettes to detect end portions containing insufficient quantities of tobacco, which has a conveyor which transports the cigarettes sideways past at least two testing stations each of which accommodates a discrete capacitive and/or photoelectronic testing unit.

### SUMMARY

There is a need for a device and a process for manufacturing of the rod-like articles that employs a simple measuring system to measure the length of a tubular segment, article length, or other article parameters.

There is a need to efficiently produce multi-segment rod-like articles so as to ensure precise control over the production of individual segments, in particular the end segments.

The object of the present invention is a device and a method for manufacturing multi-segment rod-like articles, according to the appended claims.

The process according to the invention allows production of multi-segment rod-like articles, which have been subject to control during the production process in order to obtain precise measurements of the parameters of the semi-finished products, with particular emphasis on the end segments. The high measurement precision is ensured by the fact that the non-scattered beam of light having a high intensity, illuminates directly the front surface of the inner filled segment, and the light scattering only by the material of this segment transmits information about the segment geometry and its location. In particular, the measurement allows to check geometrical parameters, for example the length of the tubular segments, the length of a rod-like article, it allows to check the quality of the tip edge, for example a dent of this end edge, and furthermore it allows to check the position of the inner segment. It is suitable for inspecting various types of articles where the end segments are hollow.

The manufacturing method allows to efficiently produce two multi-segment rod-like articles with known parameters of the end segments. Due to the fact that the illumination process is carried out on both sides of the first multi-segment rod-like article, the process can be carried out quickly by examining the two end segments. After cutting the first multi-segment rod-like article, two second multi-segment rod-like articles are obtained having known parameters, in particular having known lengths of their hollow end segments. If the parameters of the first multi-segment rod-like article do not meet predetermined conditions, then the two second multi-segment rod-like articles obtained thereby may be treated as production waste, or the first multi-segment rod-like article may be treated as production waste and may be rejected from the process before it is cut. On the other hand, if the parameters of the first multi-segment rod-like article meet the predetermined conditions, the obtained two second multi-segment rod-like articles may be directed to further stages of the production of the final product. The two second multi-segment rod-like articles may constitute a final product having hollow ends or may be used to produce a final product with ends to be filled, in subsequent stages of production, with the same material as the material that occupies their inner segments or other than the material that occupies their inner segments.

### BRIEF DESCRIPTION OF DRAWINGS

The object of the invention is described in more detail with reference to embodiments shown in the drawing, wherein:
Fig. 1 shows an example of a five-segment rod-like article,
Figs. 1a, 1b show registered images of the article of Figure 1,
Fig. 2 shows an exemplary three-segment rod-like article,
Fig. 2a shows a registered image of the article of Fig. 2,
Figs. 3, 4 show a first embodiment of a measuring system,
Fig. 5 shows a second embodiment of a measuring system,
Fig. 6 shows a first embodiment of a device for manufacturing multi-segment rod-like articles,
Fig. 7 shows a second embodiment of a device for manufacturing multi-segment rod-like articles,
Fig. 8 shows a portion of a processing machine of the device of Figs. 6 and 7, and
Fig. 9 shows steps of a process for producing multi-segment rod-like articles.

### DETAILED DESCRIPTION

The embodiments of the invention discussed in the description relate to processes for the manufacturing of products that are three-segment and five-segment rod-like articles. The presented examples of rod-like articles comprise filled segments and tubular segments. Both multi-segment rod-like articles, being semi-finished products, and final products, comprising at least two segments, will be referred to herein as multi-segment rod-like articles.

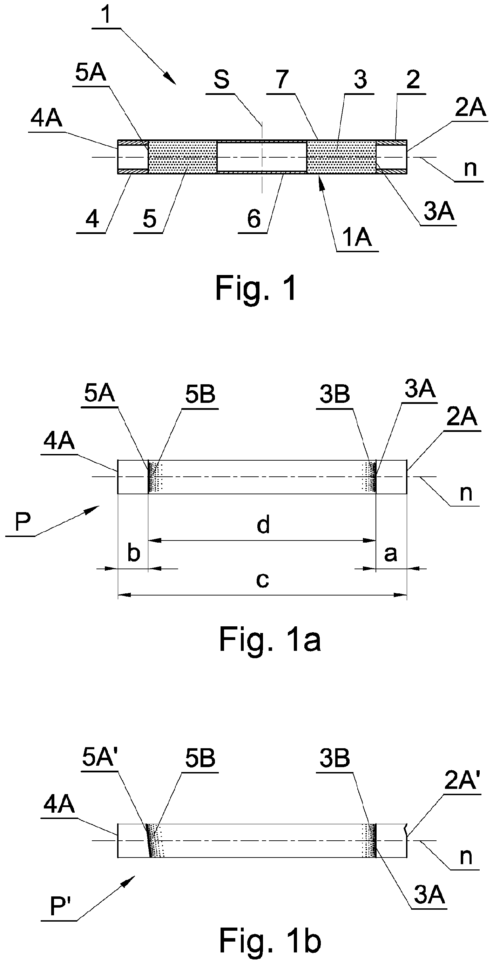

The multi-segment rod-like article 1 shown in Fig. 1 is a five-segment article which is a semi-finished product and is supposed to be subject to processing in the process discussed in the following part of this description. The multi-segment rod-like article 1 comprises a first end segment 2, a first inner segment 3, a second end segment 4, a second inner segment 5 and a middle segment 6. The first end segment 2 has a form of a tube, it is the first tubular end segment 2. The second end segment 4 also has a form of a tube, it is the second tubular end segment 4. Both the first tubular end segment 2 and the second tubular end segment 4 may be made of paper or thin cardboard. The multi-segment rod-like article 1 in Fig. 1 is shown as having a thickness greater than in the other embodiments, for increased clarity. Moreover, it may have a form of a thick-walled tube made of a filtering material or other material. The tubular segment is open on both sides, wherein the final multi-segment rod-like article does not have any structural or filling elements inside the tubular segment so that the light beam can pass uninterrupted through the interior of the tubular segment. The thick-walled tubular segment may have a circular, square, triangular orifice or in the shape of any other figure in cross-section.

The first inner segment 3 is a filled segment, and similarly the second inner segment 5 is a filled segment. The filled segments 3, 5 have a form of a cylinder comprising a filling material used in the tobacco industry. The filling material may be for example a filtering material, a material with shredded tobacco, a material with processed tobacco, a material with aromatic substances etc. The materials used in the tobacco industry are usually transmissive to electromagnetic radiation in both the visible and invisible range. Fibers of the filtering material are positioned in such a way that they connect at multiple points to form a spatial light-transmissive structure, the light of the light beam incident on such a structure is scattered in different directions. In the following part of the description, the beam of the electromagnetic radiation will, for simplicity, be referred to as a light beam. In the presented exemplary five-segment rod-like article 1, the middle segment 6 has a form of a tube, wherein the middle segment 6 may be made of any material and may be filled. The segments of the multi-segment rod-like article 1 are typically wrapped over the entire length of the article in a wrapper 7, for example in a tissue paper. The filled segments 3 and 5 may have their own wrapper. The segments may be formed in a continuous process by cutting the continuous rod into individual segments or cutting the continuous rod into single rods and then into individual segments, the segments may be filled in a discontinuous process. The thicknesses of the wrappers are not shown.

The presented five-segment rod-like article 1 is a symmetrical article with respect to a symmetry plane S perpendicular to an axis n of the five-segment rod-like article 1, the article may be cut into two identical multi-segment rod-like articles with a length equal to half the length of the five-segment rod-like article 1. The resulting multi-segment article will comprise the tubular end segment 2 or 4, the filled segment 3 or 5 and a half of the middle segment 6.

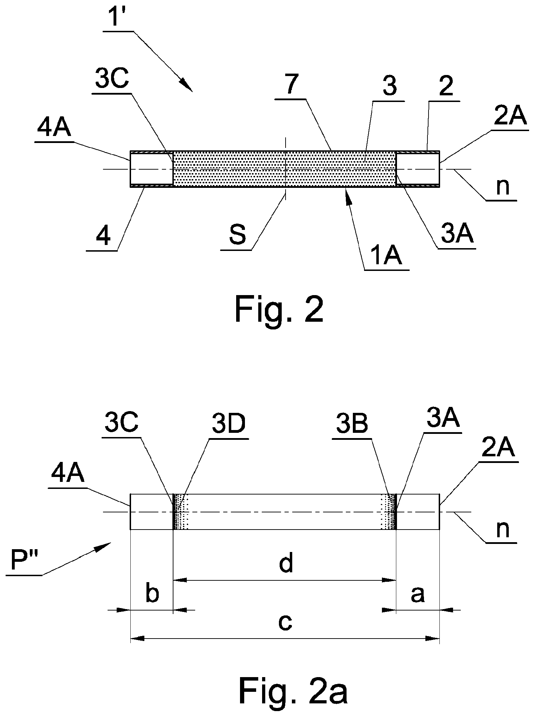

Fig. 2 shows a three-segment rod-like article 1' which comprises the first end segment 2, the filled segment 3 and the second end segment 4. The first end segment 2 is in the form of a tube, it is the first tubular end segment 2, the second end segment 4 is also in the form of a tube, it is the second tubular end segment 4. Similarly, as for the article of Fig. 1, the first tubular end segment 2 and the second tubular end segment 4 may be made of any material and have any wall thickness. The three-segment rod-like article 1' is also a symmetrical article with respect to the symmetry plane S perpendicular to the axis n of this article.

In the following manufacturing processes, the above-shown symmetrical multi-segment rod-like articles constituting semi-finished products for the manufacturing process will be cut through the symmetry plane S, and additional segments will be placed between the spaced halves of the semi-finished products, which will joined with these halves. According to the invention, the manufacturing process comprises determining the parameters of the semi-finished products by a measuring system.

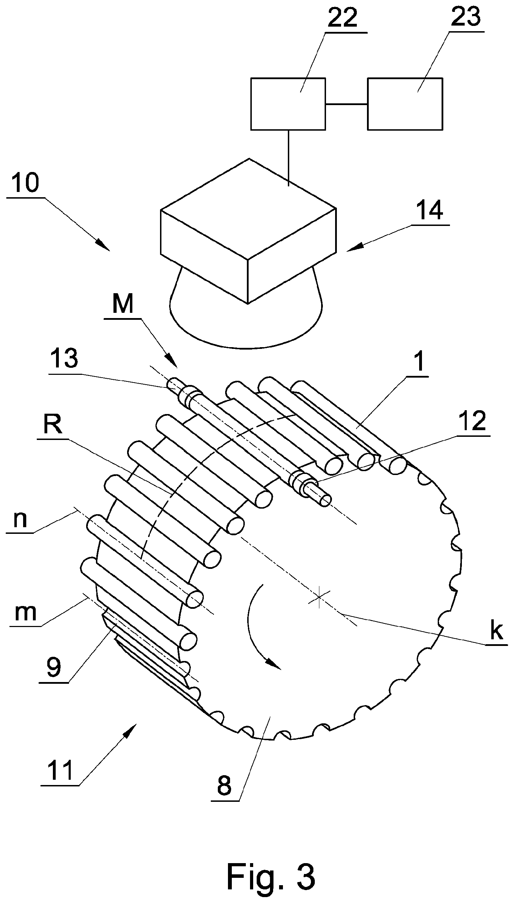

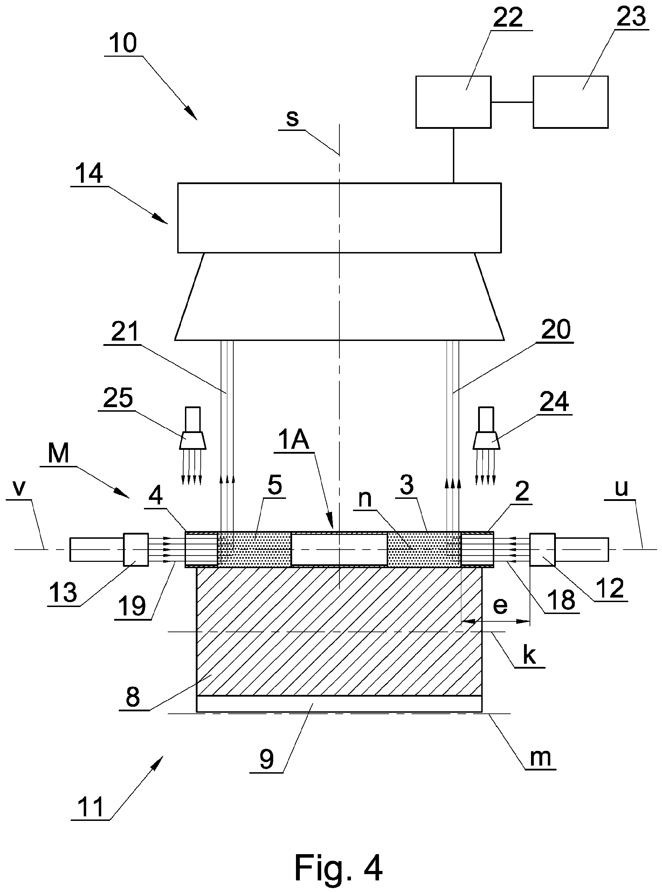

The measuring system 10 shown in Fig. 3 comprises a transport device 11, a first illuminating device 12, a second illuminating device 13, and a registering device 14 for registering an image. The transport device 11 may be a transferring mechanism in the form of a drum conveyor 8 provided with transport flutes 9 configured to receive and transport the rod-like articles 1 (alternatively, the transport device may be in the form of a belt conveyor provided with flutes for the rod-like articles). The drum conveyor 8 has an axis of rotation k and rotates in the direction shown by an arrow. The transport flute 9 is in the form of a cylindrical recess with an axis m, the rod-like article 1 with the longitudinal axis n is placed in the transport flute 9 so that the axis n of the multi-segment rod-like article 1 essentially coincides with the axis m of the transport flute 9. The measuring system 10 is also shown in Fig. 4, where a cross-section through the drum conveyor 8 is visible (the axis of rotation k lies in the plane of the cross-section) and the rod-like article 1, as shown in Fig. 1, is in a measurement position M. The first illuminating device 12 generates a first light beam 18 with an axis u, the u-axis is located in parallel to the axis n of the rod-like article 1, furthermore, the axis n and the axis u may substantially coincide when the rod-like article 1 is in the measurement position M, in which it is illuminated by the first illuminating device 12. The second illuminating device 13 generates a second light beam 19 with an axis v, wherein the axis v is located in parallel to the axis n of the rod-like article 1, furthermore, the axis n and the axis v may substantially coincide when the rod-like article 1 is in the measurement position M, in which it is illuminated by the second illuminating device 13. Above the measurement position M, an image registering device 14 is located. The first illuminating device 12 and the second illuminating device 13 may be positioned such that the axis u of the first light beam 18 from the first illuminating device and the v axis of the second light beam 19 from the second illuminating device coincide with each other. The registering device 14 may have a form of a camera and may comprise several image capturing devices.

At the measurement position M, the first light beam 18 from the first illuminating device 12 passes through the interior of the first tubular end segment 2 and illuminates the first filled segment 3. The light that passed through the first tubular end segment 2 is scattered by the material of the first filled segment 3 and partially passes through the wrapper 7, wherein a part of the scattered beam that reaches the registering device 14 is designated as 20. The second light beam 19 from the second illuminating device 13 passes through the interior of the second tubular end segment 4 and illuminates the second filled segment 5. The light that passed through the first tubular end segment 2 is scattered and partially passes through the wrapper 7, wherein a part of the scattered beam that reaches the registering device 14 is designated as 21. The first light beam 18 passes centrally through the first tubular end segment 2, the second light beam 19 passes centrally through the second tubular end segment 4, wherein it is possible to illuminate the filled segment not centrally, possibly at a slight angle. After passing through the tubular end segments 2, 4, both the first light beam 18 and the second light beam 19 have a preserved light intensity and are not scattered.

The registering device 14 receives ambient light reflected from the side surface 1A of the multi-segment rod-like article as well as light scattered from the illuminating devices 12 and 13. Fig. 1a shows a registered image P of the multi-segment rod-like article 1. The image P shows an exemplary contour of the multi-segment rod-like article 1, wherein the edges and surfaces of the segments are marked with bold lines, where 2A is an end edge of the first tubular end segment 2, 3A is a front surface of the first filled segment 3, 4A is an end edge of the second tubular end segment 4, 5A is a front surface of the second filled segment 5. A location of the first front surface 3A of the first filled segment 3 is defined as the boundary of the scattering region 3B where the first light beam 18 is scattered by the material of the first filled segment 3. A location of the second front surface 5A of the second filled segment 5 is defined as the boundary of the scattering region 5B in which the scattering of the second light beam 19 by the material of the second filled segment 5 occurs. The image P is processed in a processing unit 22. The processing unit 22 is configured to determine the parameters of the multi-segment rod-like article 1 such as, for example, a length a of the first tubular end segment 2, measured as the distance between the edge 2A and the front surface 3A of the first filled segment 3, a length b of the second tubular end segment 4 measured as the distance between the edge 4A and the front surface 5A, a length c of the multi-segment rod-like article 1 measured as the distance between the edges 2A and 4A and a distance d between the front surfaces 3A and 5A of the first and second filled segment 3 and 5. The processing unit 22 is configured to detect the position of the first filled segment 3 and the second filled segment 5, wherein a defective position is defined as the location of a line corresponding to the front surface 3A of the first filled segment 3 other than perpendicular to the longitudinal axis n of the multi-segment rod-like article 1. Information concerning the determined parameters of the multi-segment rod-like article 1 is sent to a controlling unit 23, the controlling unit 23 may send a signal to reject a defective multi-segment rod-like article 1. The image quality (increased contrast, image brightness) may be improved by using additional illumination in the form of light sources 24, 25 illuminating the side surface 1A of the multi-segment rod-like article 1 in a direction perpendicular to the axis n. There are known cameras which are equipped with lamps, to illuminate the field of view of the camera, arranged around the lens.

An example of a manufacturing process parameter is the distance e between the front surface 3A of the first filled segment 3 and the first illuminating device 12. With a fixed position of the first illuminating device, a change in distance e may indicate an incorrect position of the rod-like article 1 in the transport flute 9 in the axial direction along the axis m.

Fig. 1b shows an image P' of a defective multi-segment rod-like article which has a broken line representing the first edge 2A', indicating deformation of the first edge of the first tubular end segment 2, and further light scattered by the second filled segment 5 forms a line corresponding to the front surface 5A' positioned not perpendicularly to the axis n, which indicates a deformation or defective position of the second filled segment 5, for example indicated that the second filled segment 5 is misaligned with the axis of the article, when a filled segment with a length close to the segment diameter is used.

An image P" shown in Fig. 2 for a three-segment rod-like article looks analogously to the image P shown in Fig. 1 for the five-segment rod-like article. The scattering regions 3B, 5B, 3D registered in the images may differ depending on the type of material of the filled segments 3, 5 and the wall thickness of the tubular end segments 2, 4. Fig. 2a shows an exemplary image P" for the rod-like article 1' in a form of a cigarette.

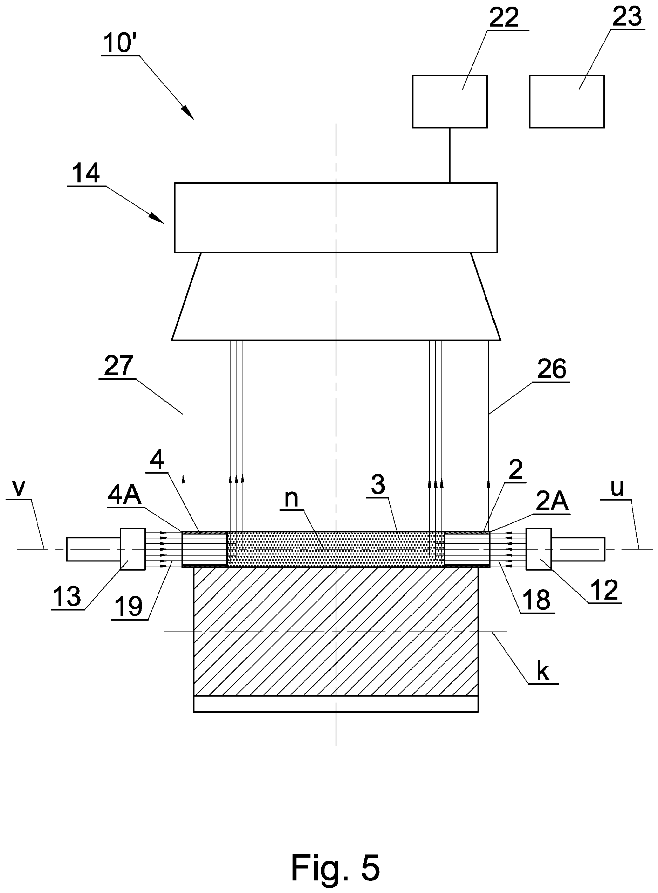

Fig. 5 shows a second embodiment of a measuring system 10' in which the first light beam 18 partially passes through the first tubular end segment 2 and illuminates the first filled segment 3, further illuminating the first edge 2A of the first tubular end segment 2. The light incident on the first edge 2A is scattered and reaches the registering device 14 as a beam 26. The second light beam 19 partially passes through the second tubular end segment 4 and illuminates the second filled segment 5, further illuminating the second edge 4A of the second tubular end segment 4. The light incident on the second edge 4A is scattered and reaches the registering device 14 as a beam 27. The image P of the multi-segment rod-like article 1 will be formed, among others, by the light reflected and partially scattered by the first edge 2A and the second edge 4A and by the light scattered by the first filled segment 3 and the second filled segment 5.

The method of manufacturing multi-segment rod-like articles includes preparing the multi-segment rod-like article, which may be performed on any machine for manufacturing the multi-segment rod-like articles. There is known a machine for making multi-segment rod-like articles that comprises feed modules for feeding the segments aligned one after the other onto a web of a wrapper so as to produce a continuous multi-segment rod that is cut into single rod-like articles. A machine is also known which assembles the segments by means of drum conveyors and transfers groups of segments onto a web of wrapper on a linear conveyor on which a continuous rod is formed and cut into single multi-segment rod-like articles.

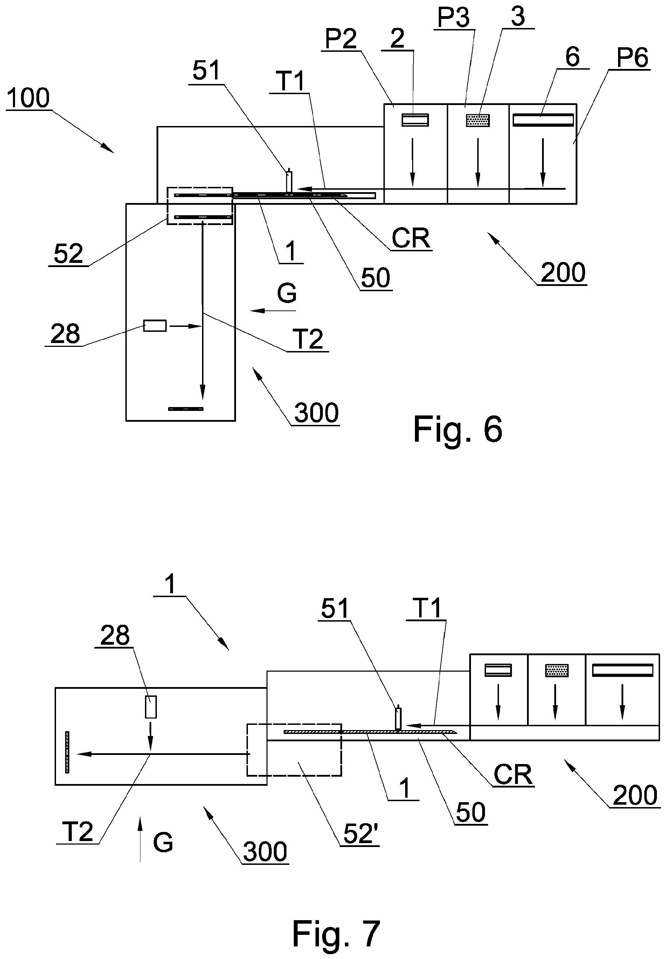

Fig. 6 shows a device 100 for manufacturing multi-segment rod-like articles for the tobacco industry from a continuous rod CR. The device 100 comprises a production machine 200 for producing multi-segment rod-like articles 1 and a process machine 300 for processing multi-segment rod-like articles 1 produced on the production machine 200. The multi-segment rod-like articles 1 produced by the production machine 200 will be called a first multi-segment rod-like articles, and the multi-segment rod-like articles produced on the process machine 300 will be referred to as a fourth multi-segment rod-like articles.

The production machine 200 comprises feeding units P6, P3 and P2 for feeding three types of segments 6, 3, 2, respectively, wherein the segments being single or double length segments are placed on the conveyor belt. The production machine 200 is equipped with a known forming unit for forming a continuous multi-segment rod CR. As shown in Fig. 6, the continuous multi-segment rod CR is transferred along the axis of the rod by means of a transporting unit 50 that may be integrated with the forming unit. The segments or double segments 6, 3, 2 are placed in a predetermined sequence on a strand of the wrapper and are wrapped therein so as to form an endless multi-element rod CR composed of segments wherein the segments are aligned coaxially one after another. The rotatable cutting head on the production machine 200 is the first cutting unit 51 that performs the first cut in the method according to the invention. As a result of the first cut from the continuous multi-segment rod CR, the first multi-segment rod-like articles 1 comprising the segments 6, 3, 2 or fragments of these segments are cut (the cutting takes place through one of the elements, and the halves of the cut segment are components of neighboring articles), wherein the endless rod CR moves along its axis in a first direction T1. The first multi-segment rod-like article 1 has the structure of two single second multi-segment rod-like articles 42 which are joined together.

A transferring device 52 is located between the production machine 200 and the processing machine 300 for changing the direction of the longitudinal movement of the first multi-segment rod-like articles 1 into a movement transversal to the axis of the first multi-segment rod-like article 1.

Within the production machine 200, the first multi-segment rod-like article 1 moves in a direction along its axis coinciding with the first direction T1. After transferring, within the process machine 300, the first multi-segment rod-like article 1 moves in a second direction T2 transverse to the axis of the first multi-segment rod-like article 1, the second direction T2 is transverse to the first direction T1. In the case of the machine arrangement shown in Fig. 6, the second direction T2 of movement of the first multi-segment rod-like articles 1 on the processing machine 300 is described by a second direction T2 perpendicular to the first direction T1. Within the process machine 300, the first multi-segment rod-like articles 1 and the fourth multi-segment rod-like articles 44 produced during the process are transported in the direction T2 and are transported in the flutes of successive drum conveyors. It is possible to design a machine system in which there is an obtuse angle between the second direction T2 and the first direction T1. Fig. 7 shows a production machine 200 for producing the first multi-segment rod-like articles 1, which is coupled to the processing machine 300 by means of a transferring device 52', wherein between the second direction T2 and the first direction there is an angle of 180 °, and wherein the first multi-segment rod-like articles 1 at the time of transfer are additionally rotated.

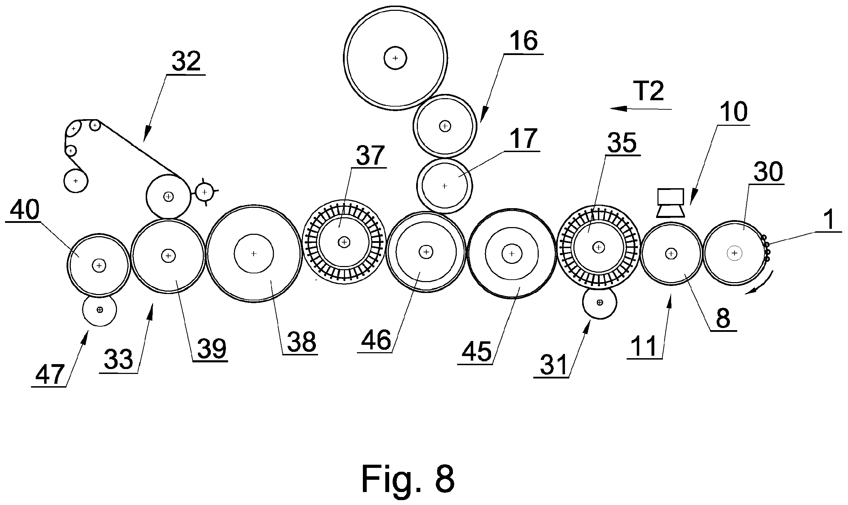

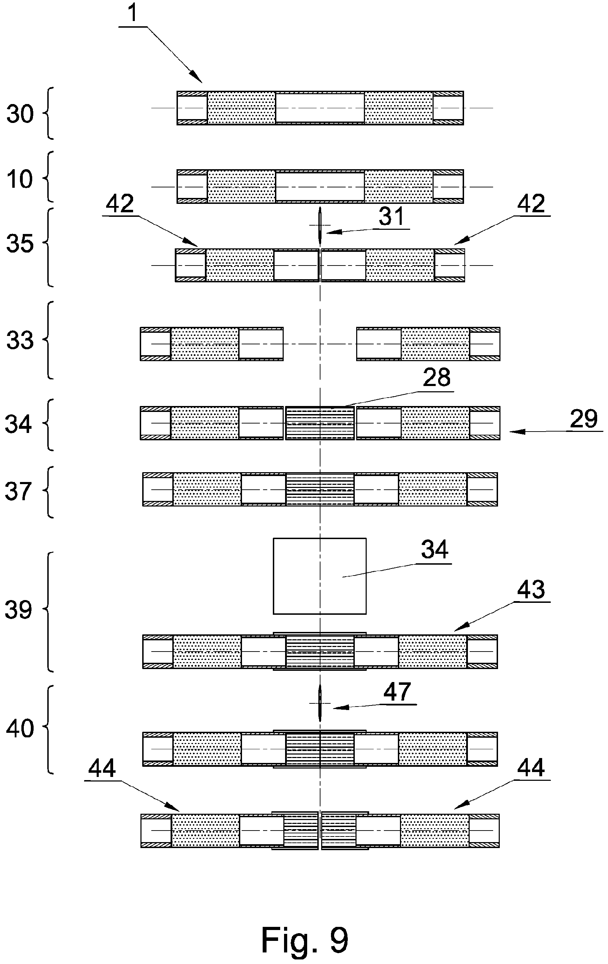

Fig. 8 shows a fragment of the processing machine 300 in view G (depicted in Figs. 6 and 7) implementing the manufacturing method according to the invention, while Fig. 9 shows the steps of the method with respect to a first five-segment multi-segment rod-like article 1. The process machine 300 comprises a plurality of drum conveyors through which the first multi-segment rod-like articles 1 and the articles formed from the first multi-segment rod-like articles are moved in direction T2. The machine comprises a measuring system 10, a second cutting unit 31 for cutting the first multi-segment rod-like article 1 into two second multi-segment rod-like articles 42, a feeding unit 16 for feeding an additional segment 28, a feeding unit 32 for feeding a piece of mouthpiece material 34, a combining unit 33 for connecting the second multi-segment rod-like articles 42 and the additional segment 28 to form a third multi-segment rod-like article 43 and a third cutting unit 47 for cutting the third multi-segment rod-like article 43 into two fourth multi-segment rod-like articles 44.

As shown in Fig. 1, the first five-segment rod-like article 1 comprises two filled segments 3, 5, one middle segment 6 and two tubular end segments 2, 4. The second filled segment 5 may be made of the same material as the first filled segment 3, the second tubular end segment 4 may be made of the same material as the first tubular end segment 2. The first multi-segment rod-like article 1 is transferred on the drum conveyors perpendicularly to the axis n of the first multi-segment rod-like article 1. The first multi-segment rod-like article 1 is transferred on the drum conveyor 30 and is transferred to the drum conveyor 8 of the measuring system 10 described above and shown in Fig. 4. In a next step of the process, the first multi-segment rod-like article 1 is cut by the second cutting unit 31 on the drum conveyor 35, wherein the cutting is performed between the first front surface 3A and the second front surface 3C of the first filled segment 3, halfway the length of the middle segment 6 and thus half the length of the first multi-segment rod-like article 1, i.e. in the symmetry plane S. The cutting results in two second multi-segment rod-like articles 42. On the drum conveyor 45, the second multi-segment articles 42 are spaced axially so as to make room for an additional segment 28. The spaced second multi-segment rod-like articles 42 are transferred to the drum conveyor 46. The feeding unit 16 feeds additional segments 28 which, by means of a drum conveyor 17, are placed in the flutes on the drum conveyor 46 between successive spaced pairs of the second multi-segment rod-like articles 42. A group 29 formed thereby, comprising two second multi-segment rod-like articles 42 and the additional segment 28, is transferred further. On the drum conveyor 37, the elements of the group 29 are axially moved towards each other so that there are no gaps between them and are further transferred by means of the drum conveyor 38. The feeding unit 32 for feeding sections 34 of the mouthpiece material consecutively feeds the sections 34 with adhesive thereon, the sections 34 of the mouthpiece material are wrapped around the group 29 on the drum conveyor 39, wherein the section 34 of the mouthpiece material comprises the ends of the second multi-segment rod-like articles 42 and the additional segment 28. Thus, a third multi-segment rod-like article 43 is formed. The third multi-segment rod-like article 43 is transferred further on the drum conveyor 40 and is cut by the third cutting unit 47 at half the length of the additional segment 28, and thus at half the length of the third multi-segment rod-like article 43, into two fourth multi-segment rod-like articles 44. The resulting fourth multi-segment rod-like articles 44 are transferred further into a packing machine, not shown. In the event that the measurements carried out by the measuring system 10 would reveal a defective first and second tubular end segment 2, 4 in the first multi-segment rod-like article 1, the fourth multi-segment rod-like article 1 constructed on the basis of such defective first multi-segment rod-like article 1 will be rejected as defective.

The machine shown in Fig. 8 is also configured to process the first three-segment rod-like article 1'. The manufacturing method, the steps of which are shown in Fig. 9, also apply to the situation in which the first multi-segment rod-like article 1' is made as a three-segment rod-like article and comprises one filled segment 3 and two tubular end segments 2, 4 as shown in Fig. 1. The method according to the invention may also be applied to multi-segment rod-like articles with a different number of segments between the tubular end segments 2, 4.

## Claims

1. A device for manufacturing multi-segment rod-like articles of tobacco industry from a continuous rod (CR), the device comprising:
- a transporting unit (50) for transferring a continuous rod (CR) along an axis of the continuous rod (CR) in a first direction (T1);
- a first cutting unit (51) for cutting the continuous rod (CR) into a series of first multi-segment rod-like articles (1, 1'), wherein the first multi-segment rod-like articles (1, 1') comprise at least one filled inner segment (3, 5) and tubular end segments (2, 4);
- a transferring mechanism (52, 52') for transferring the first multi-segment rod-like articles (1, 1') from the transporting unit (50) to flutes of a drum conveyor (30) configured to transfer the first multi-segment rod-like articles (1, 1') in a second direction (T2) transversely to the axes of the first multi-segment rod-like articles (1, 1');
- a set of drum conveyors (30, 8, 35, 45, 46, 37, 38, 39, 40) for transferring the multi-segment rod-like articles (1, 1');
- a measuring system (10, 10') for measuring parameters of the first multi-segment rod-like article (1, 1'), comprising:
- a transport device (11) for transferring the first multi-segment rod-like article (1, 1') along a path of movement (R) perpendicular to an axis (n) of the first multi-segment rod-like article (1, 1'), wherein the transport device (11) comprises transport flutes (9);
- at least one illuminating device (12, 13);
- and a second cutting unit (31) for cutting the first multi-segment rod-like article (1, 1') into two second multi-segment rod-like articles (42).
**characterized in that**
- the measuring system comprises:
- at least one illuminating device (12, 13) for generating a light beam (18, 19) for illuminating a front surface (3A, 5A, 3C) of the at least one filled inner segment (3, 5) by passing through the interior of the tubular end segments (2, 4);
- a registering device (14) for registering an image (P) of the first multi-segment rod-like article (1, 1'), wherein the registering device (14) receives light of the light beam (18, 19) scattered by the material of the at least one filled inner segment (3, 5), which penetrates a material of a wrapper (7) of the first multi-segment rod-like article (1, 1') and reaches the registering device (14), forming an image (P) of a contour of the front surfaces (3A, 5A) of the at least one filled inner segment (3, 5); and
- a processing unit (22) configured to process the image (P) of the first multi-segment rod-like article (1, 1') registered by the registering device (14) and to determine production process parameters and/or geometry parameters of the first multi-segment rod-like article (1, 1');

2. The device according to claim 1, further comprising:
- a feeding unit (16) for feeding an additional segment (28);
- a feeding unit (32) for feeding a section of a mouthpiece material (34); and
- a connecting unit for forming a third multi-segment rod-like article (43) from the two second multi-segment rod-like articles (42) and from the additional segment (28) by wrapping them with a section of a mouthpiece material (34).

3. The device according to claim 2, further comprising a third cutting unit (47) for cutting the third multi-segment rod-like article (43) into two fourth multi-segment rod-like articles (44).

4. A method for manufacturing multi-segment rod-like articles (1, 1'), comprising the steps of:
- preparing a first multi-segment rod-like article (1, 1'), comprising tubular end segments (2, 4) to which at least one filled inner segment (3, 5) is adjacent;
- transferring the first multi-segment rod-like article (1, 1') in a direction perpendicular to the axis (n) of the first multi-segment rod-like article (1, 1');
- illuminating the at least one filled inner segment (3, 5) adjacent to the tubular end segments (2, 4):
- with a first light beam (18) by directing the first light beam (18) through the interior of a first tubular end segment (2) directly onto a first front surface (3A) of the filled inner segment (3, 5) adjacent to the first tubular end segment (2); and
- with a second light beam (19) by directing the second light beam (19) through the interior of a second tubular segment (4) directly onto a second front surface (3C) of the filled inner segment (3, 5) adjacent to the second tubular segment;
- registering an image (P) of the multi-segment rod-like article (1, 1'), wherein the contour of the first front surface (3A) of the filled inner segment (3) is formed by light of the first light beam (18) scattered by the material of the filled inner segment (3), which penetrates to the outside of the multi-segment rod-like article (1, 1') through a wrapper (7), and the contour of the second front surface (3C) of the filled inner segment (3) is formed by light of the second light beam (19) scattered by the material of the filled inner segment (3) which penetrates to the outside of the multi-segment rod-like article (1, 1') through the wrapper (7);
- determining the parameters of the first multi-segment rod-like article (1, 1') on the basis of the registered image (P) of the first multi-segment rod-like article (1, 1'); and
- cutting the first multi-segment rod-like article (1, 1') between the first front surface (3A) and the second front surface (3C) to obtain two second multi-segment rod-like articles (42).

5. The method according to claim 4, wherein the second multi-segment rod-like articles (42) are spaced apart axially.

6. The method according to claim 5, wherein the additional segment (28) is positioned between the spaced apart second multi-segment rod-like articles (42).

7. The method according to claim 6, wherein the ends of the second multi-segment rod-like articles (42) and the additional segment (28) are wrapped with the mouthpiece material (34) to form a third multi-segment rod-like article (43).

8. The method according to claim 7, wherein by cutting the additional segment (28), the third multi-segment rod-like article (43) is cut into two fourth multi-segment rod-like articles (44).

9. The method according to claim 8, wherein defective fourth multi-segment rod-like articles (44) are discarded in a further process step.

10. The method according to any of claims 4 to 9, further comprising determining a length (a, b) of the tubular end segments (2, 4) and/or a length (c) of the first multi-segment rod-like article (1, 1').

## Patentansprüche

1. Vorrichtung zur Herstellung stabförmiger Mehrsegment-Artikel der Tabakindustrie aus einem kontinuierlichen Stab (CR), wobei die Vorrichtung Folgendes umfasst:
- eine Transporteinheit (50) zum Übertragen eines kontinuierlichen Stabs (CR) entlang einer Achse des kontinuierlichen Stabs (CR) in eine erste Richtung (T1);
- eine erste Schneideinheit (51) zum Schneiden des kontinuierlichen Stabs (CR) in eine Reihe von ersten stabförmigen Mehrsegment-Artikeln (1, 1'), wobei die ersten stabförmigen Mehrsegment-Artikel (1, 1') mindestens ein gefülltes inneres Segment (3, 5) und rohrförmige Endsegmente (2, 4) umfassen;
- einen Übertragungsmechanismus (52, 52') zum Übertragen der ersten stabförmigen Mehrsegment-Artikel (1, 1') von der Transporteinheit (50) an Rillen eines Trommelförderers (30), der zum Übertragen der ersten stabförmigen Mehrsegment-Artikel (1, 1') in eine zweite Richtung (T2) quer zu den Achsen der ersten stabförmigen Mehrsegment-Artikel (1, 1') konfiguriert ist;
- einen Satz Trommelförderer (30, 8, 35, 45, 46, 37, 38, 39, 40) zum Übertragen der stabförmigen Mehrsegment-Artikel (1, 1');
- ein Messsystem (10, 10') zum Messen von Parametern des ersten stabförmigen Mehrsegment-Artikels (1, 1'), das Folgendes umfasst:
- eine Transportvorrichtung (11) zum Übertragen des ersten stabförmigen Mehrsegment-Artikels (1, 1') entlang einer Bewegungsbahn (R), die senkrecht zu einer Achse (n) des ersten stabförmigen Mehrsegment-Artikels (1, 1') ist, wobei die Transportvorrichtung (11) Transportrillen (9) umfasst;
- mindestens eine Beleuchtungsvorrichtung (12, 13);
- und eine zweite Schneideinheit (31) zum Schneiden des ersten stabförmigen Mehrsegment-Artikels (1, 1') in zwei zweite stabförmige Mehrsegment-Artikel (42),
**dadurch gekennzeichnet, dass**
- das Messsystem Folgendes umfasst:
- mindestens eine Beleuchtungsvorrichtung (12, 13) zum Erzeugen eines Lichtstrahls (18, 19) zum Beleuchten einer vorderen Oberfläche (3A, 5A, 3C) des mindestens einen gefüllten inneren Segments (3, 5) durch Durchtreten durch das Innere der rohrförmigen Endsegmente (2, 4);
- eine Erfassungsvorrichtung (14) zum Erfassen eines Bildes (P) des ersten stabförmigen Mehrsegment-Artikels (1, 1'), wobei die Erfassungsvorrichtung (14) Licht des Lichtstrahls (18, 19), der durch das Material des mindestens einen gefüllten inneren Segments (3, 5) gestreut wird, aufnimmt, das ein Material einer Umhüllung (7) des ersten stabförmigen Mehrsegment-Artikels (1, 1') durchdringt und die Erfassungsvorrichtung (14) erreicht, wodurch ein Bild (P) einer Kontur der vorderen Oberflächen (3A, 5A) des mindestens einen gefüllten inneren Segments (3, 5) ausgebildet wird; und
- eine Verarbeitungseinheit (22), die dazu konfiguriert ist, das durch die Erfassungsvorrichtung (14) erfasste Bild (P) des ersten stabförmigen Mehrsegment-Artikels (1, 1') zu verarbeiten und Produktionsprozessparameter und/oder Geometrieparameter des ersten stabförmigen Mehrsegment-Artikels (1, 1') zu bestimmen.

2. Vorrichtung nach Anspruch 1, ferner umfassend:
- eine Zuführeinheit (16) zum Zuführen eines weiteren Segments (28);
- eine Zuführeinheit (32) zum Zuführen eines Abschnitts eines Mundstückmaterials (34); und
- eine Verbindungseinheit zum Ausbilden eines dritten stabförmigen Mehrsegment-Artikels (43) aus den zwei zweiten stabförmigen Mehrsegment-Artikeln (42) und aus dem weiteren Segment (28), indem sie mit einem Abschnitt eines Mundstückmaterials (34) umhüllt werden.

3. Vorrichtung nach Anspruch 2, ferner eine dritte Schneideinheit (47) zum Schneiden des dritten stabförmigen Mehrsegment-Artikels (43) in zwei vierte stabförmige Mehrsegment-Artikel (44) umfassend.

4. Verfahren zum Herstellen stabförmiger Mehrsegment-Artikel (1, 1'), die folgenden Schritte umfassend:
- Vorbereiten eines ersten stabförmigen Mehrsegment-Artikels (1, 1'), der rohrförmige Endsegmente (2, 4) umfasst, an die mindestens ein gefülltes inneres Segment (3, 5) angrenzt;
- Übertragen des ersten stabförmigen Mehrsegment-Artikels (1, 1') in eine Richtung senkrecht zu der Achse (n) des ersten stabförmigen Mehrsegment-Artikels (1, 1');
- Beleuchten des mindestens einen gefüllten inneren Segments (3, 5), das an die rohrförmigen Endsegmente (2, 4) angrenzt:
- mit einem ersten Lichtstrahl (18), indem der erste Lichtstrahl (18) durch das Innere eines ersten rohrförmigen Endsegments (2) direkt auf eine erste vordere Oberfläche (3A) des gefüllten inneren Segments (3, 5), die an das erste rohrförmige Endsegment (2) angrenzt, gerichtet wird; und
- mit einem zweiten Lichtstrahl (19), indem der zweite Lichtstrahl (19) durch das Innere eines zweiten rohrförmigen Segments (4) direkt auf eine zweite vordere Oberfläche (3C) des gefüllten inneren Segments (3, 5), die an das zweite rohrförmige Segment angrenzt, gerichtet wird;
- Erfassen eines Bildes (P) des stabförmigen Mehrsegment-Artikels (1, 1'), wobei die Kontur der ersten vorderen Oberfläche (3A) des gefüllten inneren Segments (3) durch Licht des ersten Lichtstrahls (18), der durch das Material des gefüllten inneren Segments (3) gestreut wird, ausgebildet wird, das durch eine Umhüllung (7) zu der Außenseite des stabförmigen Mehrsegment-Artikels (1, 1') durchdringt, und die Kontur der zweiten vorderen Oberfläche (3C) des gefüllten inneren Segments (3) durch Licht des zweiten Lichtstrahls (19), der durch das Material des gefüllten inneren Segments (3) gestreut wird, gebildet wird, das durch die Umhüllung (7) zu der Außenseite des stabförmigen Mehrsegment-Artikels (1, 1') durchdringt;
- Bestimmen der Parameter des ersten stabförmigen Mehrsegment-Artikels (1, 1') auf der Grundlage des erfassten Bildes (P) des ersten stabförmigen Mehrsegment-Artikels (1, 1'); und
- Schneiden des ersten stabförmigen Mehrsegment-Artikels (1, 1') zwischen der ersten vorderen Oberfläche (3A) und der zweiten vorderen Oberfläche (3C), um zwei zweite stabförmige Mehrsegment-Artikel (42) zu erhalten.

5. Verfahren nach Anspruch 4, wobei die zweiten stabförmigen Mehrsegment-Artikel (42) axial beabstandet sind.

6. Verfahren nach Anspruch 5, wobei das weitere Segment (28) zwischen den beabstandeten zweiten stabförmigen Mehrsegment-Artikeln (42) positioniert wird.

7. Verfahren nach Anspruch 6, wobei die Enden des zweiten stabförmigen Mehrsegment-Artikels (42) und des weiteren Segments (28) mit dem Mundstückmaterial (34) umhüllt werden, um einen dritten stabförmigen Mehrsegment-Artikel (43) auszubilden.

8. Verfahren nach Anspruch 7, wobei durch Schneiden des weiteren Segments (28) der dritte stabförmige Mehrsegment-Artikel (43) in zwei vierte stabförmige Mehrsegment-Artikel (44) geschnitten wird.

9. Verfahren nach Anspruch 8, wobei in einem weiteren Verarbeitungsschritt defekte vierte stabförmige Mehrsegment-Artikel (44) verworfen werden.

10. Verfahren nach einem der Ansprüche 4 bis 9, ferner Bestimmen einer Länge (a, b) der rohrförmigen Endsegmente (2, 4) und/oder einer Länge (c) des ersten stabförmigen Mehrsegment-Artikels (1, 1') umfassend.

## Revendications

1. Dispositif de fabrication d'articles en forme de tige à segments multiples de l'industrie du tabac à partir d'une tige continue (CR), le dispositif comprenant :
- une unité de transport (50) pour transférer une tige continue (CR) le long d'un axe de la tige continue (CR) dans une première direction (T1) ;
- une première unité de coupe (51) pour couper la tige continue (CR) en une série de premiers articles en forme de tige à segments multiples (1, 1'), dans lequel les premiers articles en forme de tige à segments multiples (1, 1') comprennent au moins un segment intérieur rempli (3, 5) et des segments d'extrémité tubulaires (2, 4) ;
- un mécanisme de transfert (52, 52') pour transférer les premiers articles en forme de tige à segments multiples (1, 1') de l'unité de transport (50) vers des cannelures d'un convoyeur à tambour (30) configuré pour transférer les premiers articles en forme de tige à segments multiples (1, 1') dans une seconde direction (T2) transversalement aux axes des premiers articles en forme de tige à segments multiples (1, 1') ;
- un ensemble de convoyeurs à tambour (30, 8, 35, 45, 46, 37, 38, 39, 40) pour transférer les articles en forme de tige à segments multiples (1, 1') ;
- un système de mesure (10, 10') pour mesurer des paramètres du premier article en forme de tige à segments multiples (1, 1'), comprenant :
- un dispositif de transport (11) pour transférer le premier article en forme de tige à segments multiples (1, 1') le long d'un trajet de déplacement (R) perpendiculaire à un axe (n) du premier article en forme de tige à segments multiples (1, 1'), dans lequel le dispositif de transport (11) comprend des cannelures de transport (9) ;
- au moins un dispositif d'éclairage (12, 13) ;
- et une seconde unité de coupe (31) pour couper le premier article en forme de tige à segments multiples (1, 1') en deux deuxièmes articles en forme de tige à segments multiples (42), **caractérisé en ce que**
- le système de mesure comprend :
- au moins un dispositif d'éclairage (12, 13) pour générer un faisceau lumineux (18, 19) pour éclairer une surface avant (3A, 5A, 3C) de l'au moins un segment intérieur rempli (3, 5) en passant par l'intérieur des segments d'extrémité tubulaires (2, 4) ;
- un dispositif d'enregistrement (14) pour enregistrer une image (P) du premier article en forme de tige à segments multiples (1, 1'), dans lequel le dispositif d'enregistrement (14) reçoit la lumière du faisceau lumineux (18, 19) diffusée par le matériau de l'au moins un segment intérieur rempli (3, 5), qui pénètre dans un matériau d'une enveloppe (7) du premier article en forme de tige à segments multiples (1, 1') et atteint le dispositif d'enregistrement (14), formant une image (P) d'un contour des surfaces avant (3A, 5A) de l'au moins un segment intérieur rempli (3, 5) ; et
- une unité de traitement (22) configurée pour traiter l'image (P) du premier article en forme de tige à segments multiples (1, 1') enregistré par le dispositif d'enregistrement (14) et pour déterminer des paramètres de processus de production et/ou des paramètres de géométrie du premier article en forme de tige à segments multiples (1, 1').

2. Dispositif selon la revendication 1, comprenant en outre :
- une unité d'alimentation (16) pour alimenter un segment supplémentaire (28) ;
- une unité d'alimentation (32) pour alimenter une section d'un matériau d'embout buccal (34) ; et
- une unité de liaison pour former un troisième article en forme de tige à segments multiples (43) à partir des deux deuxièmes articles en forme de tige à segments multiples (42) et du segment supplémentaire (28) en les enveloppant avec une section d'un matériau d'embout buccal (34).

3. Dispositif selon la revendication 2, comprenant en outre une troisième unité de coupe (47) pour couper le troisième article en forme de tige à segments multiples (43) en deux quatrièmes articles en forme de tige à segments multiples (44).

4. Procédé de fabrication d'articles en forme de tige à segments multiples (1, 1'), comprenant les étapes de :
- préparation d'un premier article en forme de tige à segments multiples (1, 1'), comprenant des segments d'extrémité tubulaires (2, 4) auxquels au moins un segment intérieur rempli (3, 5) est adjacent ;
- transfert du premier article en forme de tige à segments multiples (1, 1') dans une direction perpendiculaire à l'axe (n) du premier article en forme de tige à segments multiples (1, 1') ;
- éclairage de l'au moins un segment intérieur rempli (3, 5) adjacent aux segments d'extrémité tubulaires (2, 4) :
- avec un premier faisceau lumineux (18) en dirigeant le premier faisceau lumineux (18) à travers l'intérieur d'un premier segment d'extrémité tubulaire (2) directement sur une première surface frontale (3A) du segment intérieur rempli (3, 5) adjacent au premier segment d'extrémité tubulaire (2) ; et
- avec un deuxième faisceau lumineux (19) en dirigeant le deuxième faisceau lumineux (19) à travers l'intérieur d'un deuxième segment tubulaire (4) directement sur une deuxième surface avant (3C) du segment intérieur rempli (3, 5) adjacent au deuxième segment tubulaire ;
- enregistrement d'une image (P) de l'article en forme de tige à segments multiples (1, 1'), dans laquelle le contour de la première surface avant (3A) du segment intérieur rempli (3) est formé par la lumière du premier faisceau lumineux (18) diffusé par le matériau du segment intérieur rempli (3), qui pénètre à l'extérieur de l'article en forme de tige à segments multiples (1, 1') à travers une enveloppe (7), et le contour de la seconde surface avant (3C) du segment intérieur rempli (3) est formé par la lumière du deuxième faisceau lumineux (19) diffusé par le matériau du segment intérieur rempli (3) qui pénètre à l'extérieur de l'article en forme de tige à segments multiples (1, 1') à travers l'enveloppe (7) ;
- détermination des paramètres du premier article en forme de tige à segments multiples (1, 1') sur la base de l'image enregistrée (P) du premier article en forme de tige à segments multiples (1, 1') ; et
- découpe du premier article en forme de tige à segments multiples (1, 1') entre la première surface avant (3A) et la seconde surface avant (3C) pour obtenir deux deuxièmes articles en forme de tige à segments multiples (42).

5. Procédé selon la revendication 4, dans lequel les deuxièmes articles en forme de tige à segments multiples (42) sont espacés axialement.

6. Procédé selon la revendication 5, dans lequel le segment supplémentaire (28) est positionné entre les deuxièmes articles en forme de tige à segments multiples espacés (42).

7. Procédé selon la revendication 6, dans lequel les extrémités des deuxièmes articles en forme de tige à segments multiples (42) et du segment supplémentaire (28) sont enveloppées avec le matériau d'embout buccal (34) pour former un troisième article en forme de tige à segments multiples (43).

8. Procédé selon la revendication 7, dans lequel en coupant le segment supplémentaire (28), le troisième article en forme de tige à segments multiples (43) est coupé en deux quatrièmes articles en forme de tige à segments multiples (44).

9. Procédé selon la revendication 8, dans lequel les quatrièmes articles en forme de tige à segments multiples (44) défectueux sont mis au rebut dans une étape de processus supplémentaire.

10. Procédé selon l'une quelconque des revendications 4 à 9, comprenant en outre la détermination d'une longueur (a, b) des segments d'extrémité tubulaires (2, 4) et/ou d'une longueur (c) du premier article en forme de tige à segments multiples (1, 1').
